# EUROPÄISCHE PATENTSCHRIFT

(11) **EP 3 434 412 B1**
(45) Veröffentlichungstag und Bekanntmachung des Hinweises auf die Patenterteilung: **21.12.2022**
(21) Anmeldenummer: 17183550.7
(22) Anmeldetag: 27.07.2017
(51) Int. Cl.: B23Q 1/48, B23Q 1/54

(54) **WERKZEUGMASCHINE**
MACHINE TOOL
MACHINE-OUTIL

(43) Veröffentlichungstag der Anmeldung: 30.01.2019
(73) Patentinhaber: GF Machining Solutions AG, 3550 Langnau im Emmental (CH)
(72) Erfinder: Haueter, Ernst, 3533 Bowil (CH); Urfer, Christoph, 3603 Thun (CH); Scheidegger, Andreas, 3510 Konolfingen (CH)
(74) Vertreter: Li Schrag, Yue

(56) Entgegenhaltungen:
- EP-A1- 1 002 621
- EP-A1- 1 595 639
- EP-A1- 2 602 052
- WO-A1-03/101663
- DE-B3-102012 201 736
- GB-A- 2 202 769

## Beschreibung

Die Erfindung betrifft eine Werkzeugmaschine nach dem Oberbegriff des Patentanspruchs 1.

Das Dokument EP1002621A1 zeigt eine ähnlich aufgebaute Werkzeugmaschine. Die Schwenkbewegung des Schwenkarms wird bei dieser Maschine durch einen Spindelantrieb und ein Hebelgetriebe bewirkt.

Ausgehend von diesem Stand der Technik liegt der Erfindung die Aufgabe zugrunde, eine Werkzeugmaschine vorzuschlagen, die einfacher aufgebaut ist und schnellere Schwenkbewegungen des Schwenkarmes erlaubt als die bekannte Maschine.

Diese Aufgabe wird erfindungsgemäss durch die im kennzeichnenden Teil des Patentanspruchs 1 angegebenen Merkmale gelöst.

Durch die erfindungsgemässe Ausgestaltung benötigt die Werkzeugmaschine für die Schwenkbewegung des Schwenkarmes weniger bewegte Teile und erlaubt schnellere Schwenkbewegungen als die bekannte Maschine.

Besondere Ausführungsarten der Erfindung sind in den abhängigen Patentansprüchen umschrieben.

Ausführungsbeispiele der Erfindung werden nachstehend unter Bezugnahme auf die angefügten Zeichnungen erläutert. Es zeigen
- Figur 1: eine perspektivische Ansicht einer erfindungsgemässen Werkzeugmaschine;
- Figur 2: eine ähnliche Ansicht wie Figur 1 mit X-Y-Schutzwänden und einem Werkzeug-Kettenmagazin und
- Figur 3: eine Schnittansicht der Lagerung und des Antriebs des Schwenkarms.

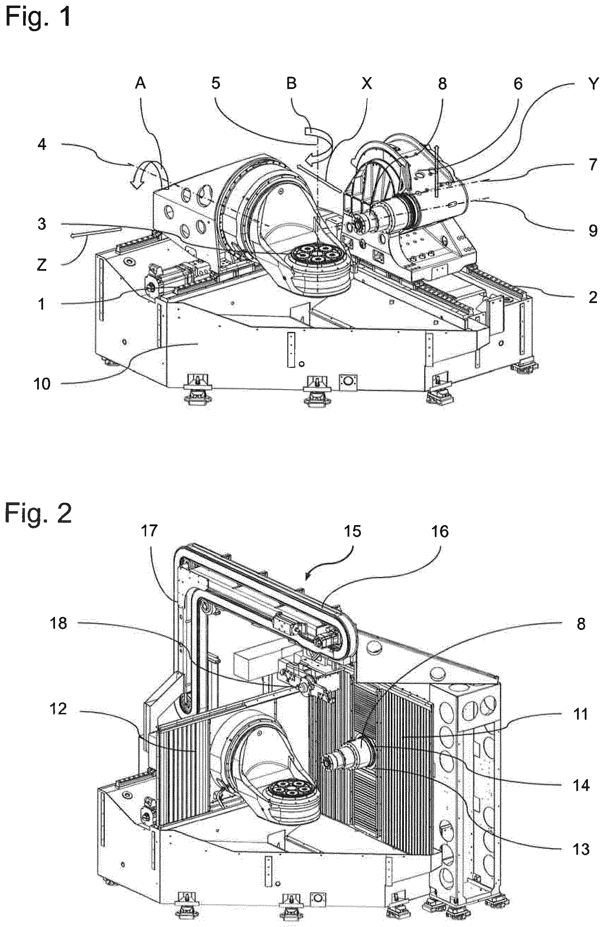

Figur 1 zeigt in einer perspektivischen Ansicht ein Ausführungsbeispiel der erfindungsgemässen Werkzeugmaschine. Diese ist zum spanabhebenden Bearbeiten von Schaufelrädern für Turbinen, so genannten "bladed disks", auch "blisks" genannt, geeignet. Auf einem Maschinenbett 10 ist eine erste horizontale Linearführung 1 und in einem rechten Winkel zu dieser eine zweite horizontale Linearführung 2 angeordnet. Auf der ersten Linearführung 1 ist eine Werkstückspannvorrichtung 3 horizontal verfahrbar und um eine horizontale Schwenkachse 4 schwenkbar angeordnet. Für die Horizontalbewegung der Werkstückspannvorrichtung 3 auf der ersten Linearführung 1 ist beispielsweise eine Kugelumlaufspindel vorgesehen. Alternativ kann die Horizontalbewegung mittels eines Linearmotors ausgeführt werden. Zudem ist die Werkstückspannvorrichtung 3 um eine rechtwinklig zu ihrer Schwenkachse 4 orientierte Drehachse 5 drehbar. Scheibenförmige Rohlinge für Schaufelräder werden liegend angeliefert, beispielsweise auf Paletten. Die Anordnung und Ausgestaltung der Werkstückspannvorrichtung 3 erlaubt es, diese Rohlinge ohne zu kippen aufzuspannen, was bei grossen und schweren Rohlingen besonders vorteilhaft ist.

Auf der zweiten Linearführung 2 ist ein Schwenkarm 6 horizontal verfahrbar und um eine horizontale Schwenkachse 7 schwenkbar angeordnet, an dessen freiem Ende eine Werkzeugspindel 8 angeordnet ist. Die Horizontalbewegungen des Schwenkarms 6 auf der zweiten Linearführung 2 werden vorzugsweise durch einen Linearmotor ausgeführt. Die Achse 9 der Werkzeugspindel ist parallel zur Schwenkachse 7 orientiert. Somit ist die erfindungsgemässe Werkzeugmaschine eine fünfachsige Maschine mit den translatorischen Achsen X, Y und Z sowie den rotatorischen Achsen A und B. Eine Besonderheit ist dabei, dass für eine reine Verschiebung des Werkzeugs entlang der Y-Achse eine kombinierte Kreisbewegung der Werkzeugspindel 8 und Linearbewegung der Schwenkachse 7 entlang der Linearführung 2 erforderlich ist. Ein besonderer Vorteil dieser Bauart besteht darin, dass sich der Schwerpunkt der gesamten auf der zweiten Linearführung 2 verfahrbaren Einheit vertikal nur wenig über der zweiten Linearführung 2 befindet und sich nur wenig nach oben bewegt, wenn die Werkzeugspindel 8 in ihre oberste Position gefahren wird. Dies im Gegensatz zu Werkzeugmaschinen anderer Bauart wie beispielsweise der Maschine nach EP1509360, bei der ebenfalls eine Werkzeugspindel auf einem Schwenkarm angeordnet ist, wobei aber der Schwenkarm mitsamt seinem Schwenkantrieb entlang einer vertikalen Linearführung angehoben wird, um die Werkzeugspindel in eine obere Position zu bringen. Ein hoher Schwerpunkt begünstigt das Auftreten unerwünschter Schwingungen. Der direkte Antrieb des Schwenkarms 6 durch einen auf der Schwenkachse 7 angeordneten Torque-Motor erlaubt schnelle und präzise Bewegungen der Werkzeugspindel 8.

Figur 2 zeigt die gleiche Maschine wie Figur 1, jedoch mit zusätzlichen Baugruppen, von denen zwei nachstehend näher beschrieben werden. Zwei X-Y-Schutzabdeckungen 11 und 12 trennen den Arbeitsraum von den übrigen Bereichen der Werkzeugmaschine, insbesondere den Linearführungen 1 und 2 ab, um Späne sowie Kühl- und Schmiermittel im Arbeitsraum zu halten. Diese X-Y-Schutzabdeckungen können von bekannter Bauart mit einer Mitnehmerplatte 13 und damit wirkverbundenen Lamellen sein, beispielsweise wie in EP19861324A1 beschrieben. Bei der erfindungsgemässen Maschine mit dem Schwenkarm 6 besteht nun das Problem, dass der die Mitnehmerplatte 13 durchdringende Teil der Werkzeugspindel 8 mit dem Verschwenken des Schwenkarms 6 zwangsläufig in der Mitnehmerplatte 13 eine Drehbewegung ausführt. Daher kann die Werkzeugspindel 8 nicht direkt mit der Mitnehmerplatte 8 verbunden sein, sondern unter Zwischenschaltung eines Drehlagers 14.

Eine weitere, in Figur 2 sichtbare Baugruppe ist ein Werkzeug-Kettenmagazin 15, das winkel- oder bogenförmig ausgebildet und so ausgebildet ist, dass ein Schenkel 16 mit einem zumindest annähern horizontal orientierten Ende oben im Arbeitsbereich und ein Schenkel 17 mit einem zumindest annähern vertikal orientierten Ende in einem vom Arbeitsbereich abgewandten Bereich hinter der ersten Linearführung endet. Im Endbereich des Schenkels 16 ist ein Werkzeugwechsler 18 angeordnet, der durch die Werkzeugspindel 8 auf kurzem Weg erreichbar ist. Der Endbereich des Schenkels 17 ist zum Beschicken und Entleeren des Werkzeug-Kettenspeichers 15 ausgebildet und durch eine Bedienungsperson gut erreichbar.

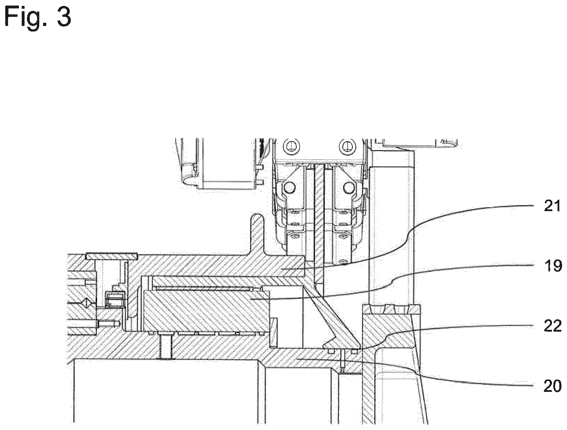

Figur 3 zeigt in einer geschnittenen Ansicht einen Ausschnitt der Lagerung des Schwenkarms 6. Letzterer ist im vorliegenden Beispiel mittels eines Aussenläufer-Torque-Motors angetrieben. Ein mit 19 bezeichneter Torque-Motor-Stator hat einem mit ihm drehfest verbundenen Stator-Teil 20. Ein Torque-Motor-Rotor 21 ist zusätzlich durch ein ölgeschmiertes Gleitlager 22 am Stator-Teil 20 abgestützt. Das Gleitlager 22 wirkt durch seinen Ölfilm schwingungsdämpfend (squeeze film damping).

### Bezugszeichenliste

- X: X-Achse
- Y: Y-Achse
- Z: Z-Achse
- A: A-Achse
- B: B-Achse
- 1: erste Linearführung
- 2: zweite Linearführung
- 3: Werkstückspannvorrichtung
- 4: Schwenkachse WZ-Spannvorr.
- 5: Drehachse
- 6: Schwenkarm
- 7: Schwenkachse Schwenkarm
- 8: Werkzeugspindel
- 9: Achse der Werkzeugspindel
- 10: Maschinenbett
- 11: X-Y-Schutzabdeckung
- 12: Z-Schutzabdeckung
- 13: Mitnehmerplatte
- 14: Drehlager
- 15: Werkzeug-Kettenmagazin
- 16: horizontaler Schenkel
- 17: vertikaler Schenkel
- 18: Werkzeugwechsler
- 19: Torque-Motor-Stator
- 20: Stator-Teil
- 21: Torque-Motor-Rotor
- 22: Gleitlager

## Patentansprüche

1. Werkzeugmaschine zum spanabhebenden Bearbeiten von Schaufelrädern für Turbinen enthaltend ein Maschinenbett (10) mit einer ersten horizontalen Linearführung (1) und einer rechtwinklig zur ersten Linearführung (1) angeordneten zweiten horizontalen Linearführung (2), wobei auf der ersten Linearführung (1) eine Werkstückspannvorrichtung (3) axial verschiebbar angeordnet ist, die um eine parallel zur zweiten Linearführung (2) orientierte Schwenkachse (4) schwenkbar und um eine rechtwinklig zur Schwenkachse (4) orientierte Drehachse (5) drehbar ist, wobei auf der zweiten Linearführung (2) ein Schwenkarm (6) axial verschiebbar ist, dessen Schwenkachse (7) parallel zur ersten Linearführung (1) angeordnet ist und der an seinem freien Ende eine Werkzeugspindel (8) trägt, deren Achse (9) parallel zur ersten Linearführung (1) orientiert ist, **dadurch gekennzeichnet, dass** der Schwenkarm (6) mittels eines auf seiner Schwenkachse (7) angeordneten Torque-Motors schwenkbar ist.

2. Werkzeugmaschine nach Anspruch 1, **dadurch gekennzeichnet, dass** für die axiale Verschiebung der Werkstückspannvorrichtung (3) auf der ersten Linearführung (1) und/oder die axiale Verschiebung des Schwenkarms (6) auf der zweiten Linearführung (2) ein Linearmotor vorhanden ist.

3. Werkzeugmaschine nach einem der vorangehenden Ansprüche, **dadurch gekennzeichnet, dass** für die Schwenkbewegung und die Drehbewegung der Werkstückspannvorrichtung (3) jeweils ein Torque-Motor vorhanden ist.

4. Werkzeugmaschine nach einem der vorangehenden Ansprüche, **dadurch gekennzeichnet, dass** parallel zur zweiten Linearführung (2) auf der der Werkstückspannvorrichtung (3) zugewandten Seite eine X-Y-Schutzabdeckung (11) mit einer Mitnehmerplatte (13) angeordnet ist, in der ein das werkzeugseitige Ende der Werkzeugspindel (8) umgebendes Drehlager (14) aufgenommen ist.

5. Werkzeugmaschine nach einem der vorhergehenden Ansprüche, **dadurch gekennzeichnet, dass** parallel zur zweiten Linearführung (2) auf der der Werkstückspannvorrichtung (3) zugewandten Seite ein winkel- oder bogenförmiges Werkzeug-Kettenmagazin (15) mit einem etwa horizontal angeordneten Schenkel (16) und einem etwa vertikal angeordneten Schenkel (17) angeordnet ist und dass am freien Ende des etwa horizontalen Schenkels (16) ein Werkzeugwechsler (18) angeordnet ist.

6. Werkzeugmaschine nach einem der vorhergehenden Ansprüche, wobei der Schwenkarm (6) um eine Schwenkachse (7) schwenkbar ist und an seinem freien Ende eine Werkzeugspindel (8) trägt, und der Schwenkarm (6) mittels eines Torque-Motors (19, 20, 21) direkt antreibbar ist und ein zwischen dem Stator (20) und dem Rotor (21) wirkendes Gleitlager (22) mit Öldämpfung angeordnet ist.

7. Werkzeugmaschine nach einem der vorhergehenden Ansprüche, wobei der Torque-Motor (19, 20, 21) einen aussenliegenden Rotor (21) und einen innenliegenden Stator (19, 20) hat.

## Claims

1. Machine tool for machining blade wheels for turbines, comprising a machine bed (10) with a first horizontal linear guide (1) and a second horizontal linear guide (2) arranged at right angles to the first linear guide (1), wherein a workpiece clamping device (3) is arranged so as to be axially displaceable on the first linear guide (1), said workpiece clamping device (3) being pivotable about a pivot axis (4) oriented parallel to the second linear guide (2) and being rotatable about an axis of rotation (5) oriented at right angles to the pivot axis (4), wherein a pivot arm (6) is axially displaceable on the second linear guide (2), the pivot axis (7) of said pivot arm (6) being arranged parallel to the first linear guide (1) and said pivot arm (6) carrying on its free end a tool spindle (8), the axis (9) of which is oriented parallel to the first linear guide (1), **characterized in that** the pivot arm (6) is pivotable by means of a torque motor arranged on its pivot axis (7) .

2. Machine tool according to Claim 1, **characterized in that** a linear motor is provided for the axial displacement of the workpiece clamping device (3) on the first linear guide (1) and/or the axial displacement of the pivot arm (6) on the second linear guide (2).

3. Machine tool according to either of the preceding claims, **characterized in that** a torque motor is provided for each of the pivoting movement and the rotational movement of the workpiece clamping device (3).

4. Machine tool according to one of the preceding claims, **characterized in that** arranged parallel to the second linear guide (2) on the side facing the workpiece clamping device (3) is an X-Y protective cover (11) having a driver plate (13), in which a pivot bearing (14) surrounding the tool-side end of the tool spindle (8) is received.

5. Machine tool according to one of the preceding claims, **characterized in that** arranged parallel to the second linear guide (2) on the side facing the workpiece clamping device (3) is an angular or arcuate tool chain magazine (15) having an approximately horizontally arranged leg (16) and an approximately vertically arranged leg (17), and **in that** a tool changer (18) is arranged at the free end of the approximately horizontal leg (16).

6. Machine tool according to one of the preceding claims, wherein the pivot arm (6) is pivotable about a pivot axis (7) and carries a tool spindle (8) at its free end, and the pivot arm (6) is directly drivable by means of a torque motor (19, 20, 21) and a plain bearing (22) with oil damping that acts between the stator (20) and the rotor (21) is arranged.

7. Machine tool according to one of the preceding claims, wherein the torque motor (19, 20, 21) has an external rotor (21) and an internal stator (19, 20).

## Revendications

1. Machine-outil pour l'usinage par enlèvement de copeaux de roues à aubes pour turbines, contenant un banc de machine (10) avec un premier guide linéaire horizontal (1) et un deuxième guide linéaire horizontal (2) agencé à angle droit du premier guide linéaire (1), un dispositif de serrage de pièce (3) étant agencé de manière déplaçable axialement sur le premier guide linéaire (1), lequel peut pivoter autour d'un axe de pivotement (4) orienté parallèlement au deuxième guide linéaire (2) et peut tourner autour d'un axe de rotation (5) orienté à angle droit de l'axe de pivotement (4), un bras pivotant (6) étant déplaçable axialement sur le deuxième guide linéaire (2), dont l'axe de pivotement (7) est agencé parallèlement au premier guide linéaire (1) et qui porte à son extrémité libre une broche d'outil (8) dont l'axe (9) est orienté parallèlement au premier guide linéaire (1), **caractérisée en ce que** le bras pivotant (6) peut pivoter au moyen d'un moteur couple agencé sur son axe de pivotement (7).

2. Machine-outil selon la revendication 1, **caractérisée en ce qu'**un moteur linéaire est présent pour le déplacement axial du dispositif de serrage de pièce (3) sur le premier guide linéaire (1) et/ou pour le déplacement axial du bras pivotant (6) sur le deuxième guide linéaire (2).

3. Machine-outil selon l'une quelconque des revendications précédentes, **caractérisée en ce qu'**un moteur couple est présent respectivement pour le mouvement de pivotement et le mouvement de rotation du dispositif de serrage de pièce (3).

4. Machine-outil selon l'une quelconque des revendications précédentes, **caractérisée en ce que**, parallèlement au deuxième guide linéaire (2), sur le côté tourné vers le dispositif de serrage de pièce (3), est agencé un couvercle de protection X-Y (11) avec une plaque d'entraînement (13), dans laquelle est reçu un palier rotatif (14) entourant l'extrémité côté outil de la broche d'outil (8).

5. Machine-outil selon l'une quelconque des revendications précédentes, **caractérisée en ce que**, parallèlement au deuxième guide linéaire (2), sur le côté tourné vers le dispositif de serrage de pièce (3), est agencé un magasin à chaîne d'outils (15) en forme d'angle ou d'arc avec une branche (16) agencée approximativement horizontalement et une branche (17) agencée approximativement verticalement, et **en ce qu'**un changeur d'outil (18) est agencé à l'extrémité libre de la branche (16) approximativement horizontale.

6. Machine-outil selon l'une quelconque des revendications précédentes, le bras pivotant (6) pouvant pivoter autour d'un axe de pivotement (7) et portant à son extrémité libre une broche d'outil (8), et le bras pivotant (6) pouvant être entraîné directement au moyen d'un moteur couple (19, 20, 21) et un palier lisse (22) avec amortissement à huile agissant entre le stator (20) et le rotor (21) étant agencé.

7. Machine-outil selon l'une quelconque des revendications précédentes, le moteur couple (19, 20, 21) ayant un rotor (21) situé à l'extérieur et un stator (19, 20) situé à l'intérieur.
